# EUROPÄISCHE PATENTSCHRIFT

(11) **EP 1 400 670 B1**
(45) Veröffentlichungstag und Bekanntmachung des Hinweises auf die Patenterteilung: **21.12.2005**
(21) Anmeldenummer: 02405822.4
(22) Anmeldetag: 23.09.2002
(51) Int. Cl.: F02D 23/00, F02B 37/16, F02D 33/02

(54) **Verfahren und Vorrichtung zum Betreiben eines Abgasturboladers**
Method and device for operating a turbocharger
Procédé et dispositif pour controller un turbocompresseur

(43) Veröffentlichungstag der Anmeldung: 24.03.2004
(73) Patentinhaber: ABB Turbo Systems AG, 5400 Baden (CH)
(72) Erfinder: Bernard, Olivier, 5400 Baden (CH)
(74) Vertreter: ABB Patent Attorneys

(56) Entgegenhaltungen:
- GB-A- 2 083 135
- PATENT ABSTRACTS OF JAPAN vol. 1998, no. 14, 31. Dezember 1998 (1998-12-31) & JP 10 246118 A (SUZUKI MOTOR CORP), 14. September 1998 (1998-09-14)
- PATENT ABSTRACTS OF JAPAN vol. 2000, no. 02, 29. Februar 2000 (2000-02-29) & JP 11 315740 A (NISSAN MOTOR CO LTD), 16. November 1999 (1999-11-16)
- PATENT ABSTRACTS OF JAPAN vol. 2002, no. 02, 2. April 2002 (2002-04-02) & JP 2001 280145 A (NISSAN MOTOR CO LTD), 10. Oktober 2001 (2001-10-10)

## Beschreibung

### Technisches Gebiet

Die Erfindung bezieht sich auf das Betreiben eines Abgasturboladers. Sie bezieht sich insbesondere auf ein Verfahren zum Betreiben eines Abgasturboladers gemäss den Merkmalen des Oberbegriffs des Patentanspruches 1, eine Vorrichtung zur Durchführung dieses Verfahren gemäss den Merkmalen des Oberbegriffes des Patentanspruches 5 und einen Abgasturbolader mit einer solchen Vorrichtung.

### Stand der Technik

Abgasturbolader werden zur Aufladung von Brennkraftmaschinen verwendet, wobei eine durch das Abgas angetriebene Turbine des Abgasturboladers über eine gemeinsame Welle einen Verdichter antreibt. Der Verdichter saugt über eine Ansaugleitung ein Gas, meist Luft oder ein Gemisch aus Luft und einem Gas, meist Brenngas und/oder Abgas, an und verdichtet dieses. Über eine stromab am Verdichter angeschlossene Verdichterleitung, die mit einem Ansaugkanal der Brennkraftmaschine verbunden ist, wird das verdichtete Gas Brennkammern der Brennkraftmaschine zugeführt. Mit Hilfe des verdichteten Gases kann in den Brennkammern der Brennkraftmaschine mehr Brennstoff verbrannt, als dies mit normalen Saugmotoren der Fall wäre, und also die Leistung der Brennkraftmaschine erhöht werden. Die den Brennkammern zugeführte Gasmenge bestimmt zusammen mit anderen Parametern, wie der Einstellung und Verteilung des Brennstoffgemisches und dem Zündzeitpunkt, die aktuelle Leistung der Brennkraftmaschine wesentlich mit. Dies bedeutet, dass beispielsweise bei einer Lastaufnahme, während des Anfahrens oder Beschleunigens der Maschine, eine möglichst hohe Gasmenge zugeführt und beim Drosseln der Maschine möglichst mit einer reduzierten Gasmenge gearbeitet werden sollte. Typischerweise wird die Gasmenge, die den Brennkammern der Brennkraftmaschine zugeführt wird, mit Hilfe einer Drosselklappe reguliert, die stromab des Verdichters vor den Brennkammern angeordnet ist, wie dies beispielsweise in dem Artikel "New high efficency high speed gas engine the 3MW class" in CIMAC Congress 1998 Copenhagen, Seite 1393, Fig. 9 gezeigt oder MTZ Motortechnische Zeitschrift 50 (1989) 5, Seite 231, Bild 7 beschrieben ist.

So wie während des Betriebes des Abgasturboladers in der Ansaugleitung stromauf des Verdichters und in den strömungsführenden Leitungen stromab des Verdichters unterschiedliche Drücke herrschen, so können auch durch das Arbeiten mit der Drosselklappe verschiedene Drücke in den Leitungsabschnitten stromauf der Drosselklappe und stromab der Drosselklappe auftreten. Es hat sich beispielsweise gezeigt, dass beim Drosseln der Brennkraftmaschine, wenn die Drosselklappe im wesentlichen geschlossen ist, im Bereich stromab der Drosselklappe ein Unterdruck herrscht gegenüber dem Druck im Bereich stromauf der Drosselklappe. Unter Volllast bringt nun der Verdichter in der Regel volle Leistung, so dass der Druck im Bereich stromauf der Drosselklappe, also zwischen Verdichter und Drosselklappe, im Normalfall auch höher ist als der Druck stromauf des Verdichters in der Ansaugeleitung. Um bei einer plötzlichen Lastwegnahme diese unerwünschten Druckverhältnisse zu beseitigen und einen schnellen Druckabbau stromauf der Drosselklappe zu erhalten, sind verschiedentlich Bypassleitungen vorgeschlagen worden, die den Bereich zwischen Verdichter und Drosselklappe stromab des Verdichters mit der Ansaugleitung stromauf des Verdichters verbinden, und ein Abströmen des verdichteten Gases aus dem Bereich zwischen Verdichter und Drosselklappe zurück in die Ansaugleitung stromauf des Verdichters ermöglichen. Beispiele für solche Bypassleitungen sind in DE-A-28 23 067 und DE-A-197 28 850 beschrieben. Um die Bypassleitung gezielt einsetzen zu können sind in der Bypassleitung ein oder mehr Bypassventile vorgesehen. Die Steuerung dieser Bypassventile funktioniert im wesentlichen druckgesteuert. Dabei werden die auftretenden Druckdifferenzen durch Druckventile zum Teil direkt genutzt, wobei sogar Drücke aus dem Abgasbereich des Systems berücksichtigt werden. Zum Teil erfolgt die Steuerung auch elektronisch wobei neben den Druckdaten auch Temperatur, Drehzahl und andere Daten des Systems berücksichtigt werden.

Auch bei einer Beschleunigung aus dem Teillastbereich z.B. in den Vollastbereich können sich unbefriedigende Druckverhältnisse im System Brennkraftmaschine-Abgasturbolader in Gaszuleitungen und Abgasableitungen einstellen. Im Teillastbereich bei kleinem Öffnungswinkel der Drosselklappe entsteht z.B. ein unnötig hoher Druck zwischen Verdichter und Drosselklappe der über den Verdichter zurückwirkt auf die Turbine und diese bremst. Die gebremste Turbine ihrerseits bewirkt einen Rückstau des Abgases im Bereich zwischen Brennkammern und Turbine, was den Wirkungsgrad der Brennkraftmaschine verringert. Um diesen Rückstau und den damit verbundenen hohen Druck stromauf der Turbine abzubauen, wird heutzutage ein Umströmen der Turbine mittels einer ventilgesteuerten Abgasbypassleitung (Waste-Gate) ermöglicht. Dies führt jedoch zu einer sehr trägen Beschleunigung des Abgasturboladers bei Lastaufnahme. Um eine verbesserte Ansprechzeit des träge reagierenden Turboladers zu erreichen, ist in US 4,774,812 und DE-A-198 24 476 vorgeschlagen worden, auf der Verdichterseite ebenfalls eine Bypassleitung zur Umgehung des Verdichters vorzusehen. Im Teillastbereich wird eine Bypassströmung von der Ansaugleitung stromauf des Verdichters in den Bereich zwischen Verdichter und Drosselklappe stromab des Verdichters geführt, so dass wenig bis gar kein Gas durch den Verdichter strömt und der Abgasturbolader im Leerlauf nur getrieben durch die Turbine läuft. Die oben beschriebene Bremswirkung des Verdichters fällt dadurch weg. Bei einer plötzlichen Beschleunigung aus dem Teillastbetrieb z.B. in den Volllastbetrieb wird die Bypassleitung dagegen geschlossen und der bereits relativ schnell laufende Verdichter kann relativ schnell einen entsprechenden Ladedruck aufbauen. Sowohl in US 4,774,812 als auch in DE-A-198 24 476 erfolgt die Steuerung der Ventile in der Bypassleitung und in der Leitung, in der der Verdichter angeordnet ist, elektronisch. Dazu werden die unterschiedlichsten Betriebsdaten von Turbolader und Brennkraftmaschine, über Sensoren erfasst, in einer Steuereinheit verarbeitet und ein entsprechendes Steuersignal an die Ventile in den beiden Leitungen ausgegeben.

GB 2 083 135 offenbart ebenfalls eine Vorrichtung zum Betreiben eines Abgasturboladers, bei der die Bypassleitung eine mittels einem Ventil gesteuerte Umströmung des verdichtenden Elements von seiner stromaufwärts gelegenen Seite zu seiner stromabwärts gelegenen Seite erlaubt.

### Darstellung der Erfindung

Diese elektronische Steuerungen der Ventile, wie sie in US-4,774,812 und DE-A-198 24 476 beschrieben sind, sind kompliziert und aufwendig und aufgrund der nötigen Sensoren auch teuer.

Aufgabe der Erfindung ist es deshalb, ein einfaches, kostengünstiges Verfahren zum Betreiben eines Abgasturboladers vorzustellen, bei dem der Aufladewirkungsgrad des Abgasturboladers bei der Lastaufnahme der Brennkraftmaschine verbessert wird. Weiter wird eine technisch sehr einfache und daher auch kostengünstige Vorrichtung zur Durchführung dieses Verfahrens vorgestellt.

Diese Aufgabe löst ein Verfahren mit den Merkmalen des Patentanspruches 1.

Wie bei den in US-4,774,812 und DE-A-198 24 476 beschriebenen Verfahren wird in dem erfindungsgemässen Verfahren eine Hauptströmung eines Gases über eine Ansaugleitung einem Verdichter des Abgasturboladers zugeführt, im Verdichter verdichtet und über eine Verdichterleitung in einen Ansaugkanal der Brennkraftmaschine geführt, wobei die über den Ansaugkanal an Brennkammern der Brennkraftmaschine weitergeleitete Gasmenge mittels einer zwischen dem Verdichter und den Brennkammern angeordneten Drosselklappe reguliert wird. Anders als bei den in US-4,774,812 und DE-A-198 24 476 beschriebenen Verfahren wird aber erfindungsgemäss dann, wenn im Bereich stromab des Verdichters zwischen Verdichter und Drosselklappe ein Unterdruck gegenüber dem Druck in der Ansaugleitung stromauf des Verdichters auftritt, dieser Unterdruck dazu genutzt, eine Bypassströmung zu erzeugen, die den Verdichter von seiner stromaufwärts gelegenen Seite zu seiner stromabwärts gelegenen Seite umströmt. Mit anderen Worten, die Bypassströmung wird unter Ausnutzung des im Bereich zwischen Verdichter und Drosselklappe herrschenden Unterdruckes erzeugt, stromauf des Verdichters aus der über den Verdichter geführten Hauptströmung abgezweigt und stromab des Verdichters zwischen Verdichter und Drosselklappe wieder in die Hauptströmung zurückgeführt.

Durch die Ausnutzung des Unterdruckes für die Erzeugung der Bypassströmung lässt sich dieses Verfahren sehr einfach und kostengünstig durchführen. Die Rückführung der Bypassströmung in die Hauptströmung vor der Drosselklappe lässt eine unkomplizierte Steuerung in Bezug auf das Öffnen und Schliessen der Bypassleitung zu.

Bei der erfindungsgemässen Lösung kommt es dagegen nur auf das Druckverhältnis zwischen Druck p1 in der Ansaugleitung und Druck p2 im Bereich zwischen Verdichter und Drosselklappe an. Während des Startens, wie auch während der Lastaufnahme im tiefen Lastbereich ist der Druck p1 in der Ansaugleitung grösser als der Druck p2 zwischen Verdichter und Drosselklappe, so dass die Bypassströmung durch die Bypassleitung in Richtung der Hauptströmung um den Verdichter herum zu den Brennkammern hin erfolgt. Dies verbessert den Aufladewirkungsgrad nicht nur beim Starten der Brennkraftmaschine, sondem vor allem auch erheblich bei der Lastaufnahme im tiefen Lastbereich. Im Normalbetrieb ist der Druck p2 zwischen Verdichter und Drosselklappe grösser als der Druck p1 in der Ansaugleitung. Unabhängig vom Druck p3 im Bereich stromab der Drosselklappe herrscht daher bei der erfindungsgemässen Lösung im Normalbetrieb immer ein Strömungsdruck in Richtung Ansaugleitung. Statt mit einer komplizierten Steuerung für wechselnde Strömungsrichtungen, kann daher bei der erfindungsgemässen Lösung mit einem einfachen, druckgesteuerten Rückschlagventil gearbeitet werden.

Wird die Bypassströmung stromab eines Strömungsmessers aus der Hauptströmung in der Ansaugleitung abgezweigt, so erhält man über den Strömungsmesser auch bei Umströmung des Verdichters aussagekräftige Daten über den Massestrom, die wichtig sind für die Einstellung des Brennstoffgemisches. Wird die Bypassströmung im Bereich der Verdichterleitung wieder in die Hauptströmung zurückgeführt so kann der Abgasturbolader sehr einfach von der Brennkraftmaschine getrennt werden, was die Montagekosten reduziert.

Sehr einfach ist dieses Verfahren durchzuführen mit einer erfindungsgemässen Vorrichtung die mit einem herkömmlichen System aus Brennkraftmaschine und Abgasturbolader verbindbar ist. Das herkömmliche System von Brennkraftmaschine und Abgasturbolader weist einen Abgasturbolader mit einem über eine Turbine angetriebenen Verdichter auf. Letzterer ist stromauf mit einer Ansaugleitung und stromab mit einer Verdichterleitung strömungsverbunden. Die Verdichterleitung ist mit einem Ansaugkanal der Brennkraftmaschine zu einer Strömungsleitung verbindbar, wobei in der Strömungsleitung eine Drosselklappe vorgesehen ist. Die erfindungsgemässe Vorrichtung umfasst eine Bypassleitung, die in montiertem Zustand auf ihrer ersten Seite mit der Ansaugleitung stromauf des Verdichters und mit ihrer zweiten Seite zwischen dem Verdichter und der Drosselklappe mit der Strömungsleitung verbunden ist. Die Bypassleitung ist dabei derart ausgebildet, dass sie nur eine Umströmung des Verdichters von der stromaufwärts gelegenen Seite zur stromabwärts gelegenen Seite des Verdichters erlaubt. Am einfachsten und kostengünstigsten ist dies dadurch zu ermöglichen, dass in der Bypassleitung mindestens ein Regelelement, welches eine Strömung nur von der stromaufwärts gelegenen Seite zur stromabwärts gelegenen Seite des Verdichters zulässt, beispielsweise ein Rückschlagventil, vorgesehen ist, eine Strömung in Gegenrichtung aber verhindert. Das Rückschlagventil ist als druckempfindliches Ventil ausgestaltet und von der einen Seite her mit dem Druck p1 und von der anderen Seite her mit dem Druck p2 beaufschlagt. Dies erlaubt eine sehr einfache, sich von selbst ergebende Steuerung die nicht störanfällig und obendrein noch sehr kostengünstig ist. Möglichkeiten für die Ausgestaltung eines solchen Rückschlagventils sind z.B. ein federgestütztes Kugel- oder Tellerventil. Je nach Geometrie der Bypassleitung kann es sinnvoll sein, mehr als ein Rückschlagventil vorzusehen.

Die erfindungsgemässe Vorrichtung kann in neuen Turboladern vorgesehen werden, sie eignet sich aber auch zum Nachrüsten bestehender Abgasturbolader.

Ist ein Abgasturbolader zum Aufladen einer Brennkraftmaschine bereits mit einer erfindungsgemässen Vorrichtung versehen, so ist dies sehr vorteilhaft für die Montage. Die Bypassleitung ist dann mit Vorteil mit der Verdichterleitung stromab des Verdichters verbunden, damit sie bei der Montage nicht separat mit dem Ansaugkanal des Brennkraftmaschine verbunden werden muss. Freilich ist es auch denkbar dass die zweite Seite der Bypassleitung nicht mit der Verdichterleitung des Abgasturboladers verbunden ist sondern für eine Verbindung mit dem Ansaugkanal der Brennkraftmaschine ausgelegt ist. In diesem Fall muss die Drosselklappe im Ansaugkanal der Brennkraftmaschine angeordnet sein, und die Bypassleitung muss bei der Montage noch stromauf der Drosselklappe mit dem Ansaugkanal der Brennkraftmaschine verbunden werden.

Brennkraftmaschinen die mit einem Abgasturbolader, ausgerüstet sind, die eine erfindungsgemässe Vorrichtung aufweisen, erzielen einen höheren Aufladewirkungsgrad sowohl beim Starten als auch vor allem bei jeder Lastaufnahme aus dem Leerlauf, wenn die Drosselklappe rasch geöffnet wird und, solange der Druck p2 kleiner als der Druck p1 ist, der noch langsam drehende Verdichter wie eine Drossel wirkt.

Weitere bevorzugte Ausführungsformen sind Gegenstand weiterer abhängigen Patentansprüche.

### Kurze Beschreibung der Zeichnung

Im folgenden wird der Erfindungsgegenstand anhand eines bevorzugten Ausführungsbeispiels, welches in der beiliegenden Zeichnung dargestellt ist, näher erläutert. Es zeigt rein schematisch:
- Figur 1: einen Abgasturbolader mit einer erfindungsgemässen Vorrichtung verbunden mit einer Brennkraftmaschine;
- Figur 2: einen Teil einer Verdichterseite eines Abgasturboladers im Schnitt entlang seiner Längachse mit integrierter Bypassleitung; und
- Figur 3: eine weitere Ausführungsform eines Abgasturboladers mit integrierter Bypassleitung in einer Darstellung gemäss Fig. 2.

Die in den Zeichnungen verwendeten Bezugszeichen und deren Bedeutung sind in der Bezugszeichenliste zusammengefasst aufgelistet. Die beschriebene Ausführungsform steht beispielhaft für den Erfindungsgegenstand und hat keine beschränkende Wirkung.

### Wege zur Ausführung der Erfindung

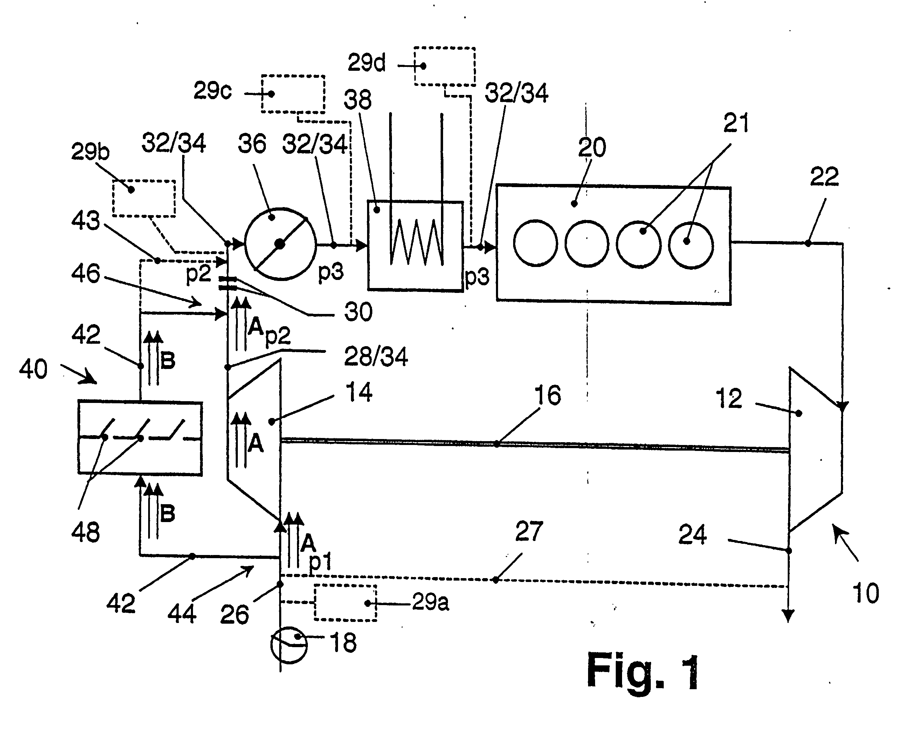

Die Figur1 zeigt einen Abgasturbolader 10 mit einer Turbine 12 und einem Verdichter 14, Turbine 12 und Verdichter 14 sind auf einer gemeinsamen Welle 16 angeordnet. Von einer Brennkraftmaschine 20 mit Brennkammern 21 führt eine Abgasleitung 22 zur Turbine 12. Über die Abgasleitung 22 werden der Turbine Abgase zugeführt, die die Turbine 12 antreiben, so dass über die gemeinsame Welle 16 auch der Verdichter 14 beginnt zu arbeiten. Über eine Ableitung 24 werden die Abgase stromab der Turbine 12 abgeführt.

Der Verdichter 14 zieht über eine stromauf angeordnete Ansaugleitung 26 Luft unter dem Druck p1 an. Wie durch die gestrichelt gezeichnete Linie 27 angedeutet, ist es auch möglich, einen Teil des Abgases mittels einer Verbindungsleitung aus der Ableitung 24 abzuzweigen und der über die Ansaugleitung angesaugten Luft stromauf des Verdichters14 beizumischen. Auch kann der angesaugten Luft aus einem Brenngasbehälter 29a, 29b, 29c, 29d ein Brenngas beigemischt werden. Diese Beimischung kann sowohl stromauf 29a des Verdichters 14, als auch an verschiedenen Orten stromab 29b, 29c, 29d des Verdichters erfolgen (jeweils gestrichelt angedeutet). Angesaugte Luft wie auch ein Luft-Abgas- und Luft-Brenngasgemisch oder eine Mischung aus Luft, Brenngas und Abgas sind Gase, weswegen weiterhin nur noch von Gas gesprochen wird. Das angesaugte Gas wird über den Verdichter 14 geführt, von diesem verdichtet, und stromab in eine Verdichterleitung 28 eingespeist. Die Verdichterleitung 28 ist mit Hilfe einer Flanschverbindung 30 mit einem Ansaugkanal 32 der Brennkraftmaschine 20 verbunden. Zusammen bilden Verdichterleitung 28 und Ansaugkanal 32 eine Strömungsleitung 34 in der eine Drosselklappe 36 angeordnet ist. Obgleich dies im Allgemeinen nicht üblich ist, ist es freilich auch denkbar, dass die Drosselklappe 36 in der Verdichterleitung 28 des Abgasturboladers 10 statt im Ansaugkanal 32 der Brennkraftmaschine 20 angeordnet ist. Stromab der Drosselklappe 36 ist in dem hier gezeigten Beispiel ein Ladeluftkühler 38 angeordnet. Stromab des Ladeluftkühlers 38 ist der Ansaugkanal 32 mit den Brennkammern 21 der Brennkraftmaschine 20 verbunden.

Der Abgasturbolader 10 weist eine erfindungsgemässe Vorrichtung 40 mit einer Bypassleitung 42 auf, die auf ihrer ersten Seite 44 mit der Ansaugleitung 26 stromauf des Verdichters 14 und mit ihrer zweiten Seite 46 stromab des Verdichters zwischen dem Verdichter 14 und der Drosselklappe 36 mit der Verdichterleitung 28 verbunden ist. Es ist natürlich auch denkbar die zweite Seite 46 der Bypassleitung 42 zwischen dem Verdichter 14 und der Drosselklappe 36 mit dem Ansaugkanal 32 statt mit der Verdichterleitung 28 zu verbinden, wie dies mit der gestrichelten Linie 43 angedeutet ist. Die Bypassleitung 42, 43 ist mit einfachen Rückschlagventilen 48 ausgestattet, die nur eine Umströmung des Verdichters 14 von der stromaufwärts gelegenen Seite zur stromabwärts gelegenen Seite des Verdichters 14 erlauben. Die Rückschlagventile 48 öffnen sich automatisch, wenn der Umgebungsdruck p1 grösser wird als der im Bereich zwischen Verdichter 14 und Drosselklappe 36 herrschende Druck p2. Dies geschieht jeweils, wenn die Drosselklappe 36 ganz geöffnet wird, wie z.B. beim Starten der Brennkraftmaschine 20; vor allem aber auch sehr effizient bei einer Lastaufnahme aus dem Leerlauf, weil dann der langsam drehende Verdichter 14 wie eine Drossel wirkt.

Immer, wenn der Druck p1 in der Ansaugleitung 26 also grösser ist als der Druck p2 im Bereich zwischen Verdichter 14 und Drosselklappe 36, so öffnen die Rückschlagventile 48 aufgrund des Unterdruckes p2 stromab des Verdichters 14 und es entsteht eine Bypassströmung B, die stromauf des Verdichters 14 aus der Hauptströmung A abgezweigt wird. Die aus der Hauptströmung A abgeleitete Bypassströmung B wird durch die Bypassleitung 42, 43 von der stromaufwärts gelegenen Seite um den Verdichter 14 herum zur stromabwärtsgelegenen Seite des Verdichters 14 geführt und vor der Drosselklappe 36 stromab des Verdichters 14 in die Hauptströmung A zurückgeführt. Is in der Ansaugleitung 26 ein Strömungsmesser 18 vorgesehen, so ist es vorteilhaft die Bypassströmung B stromab des Strömungsmessers 18 aus der Hauptströmung A in der Ansaugleitung 26 abzuzweigen. Auf diese Weise erhält man über dem Strömungsmesser 18 auch bei Umströmung des Verdichters aussagekräftige Daten über den Massestrom.

Es ist natürlich denkbar statt den vielen Rückschlagventilen 48 nur ein Rückschlagventil 48 vorzusehen oder statt des oder der Rückschlagventile 48 ein oder mehrer andere Regelelemente, die das Durchströmen der Bypassleitung 42, 43 nur in der Richtung von der stromaufwärts gelegenen Seite zur stromabwärts gelegenen Seite des Verdichters 14 erlauben.

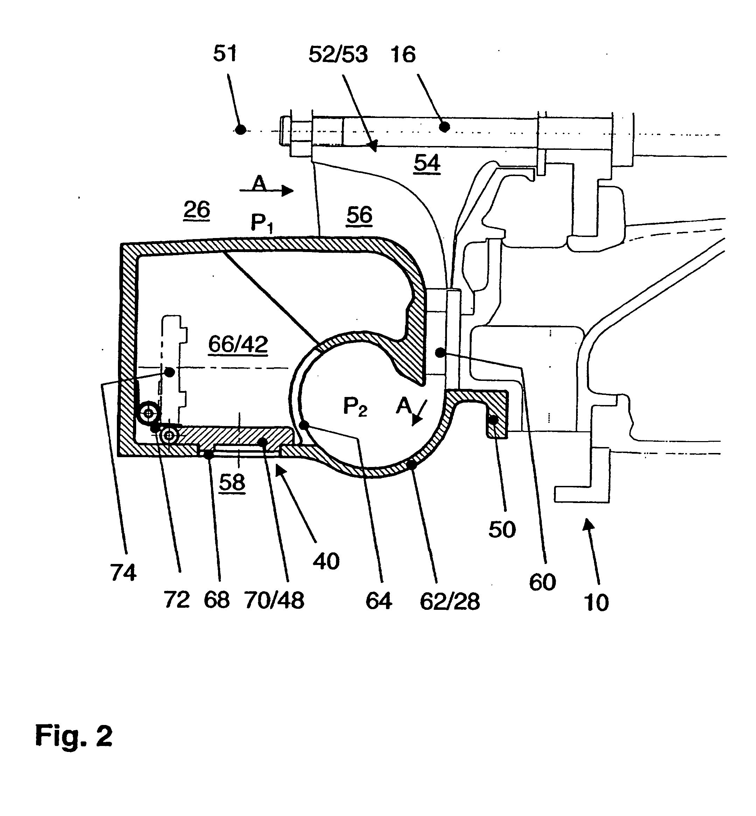

In Figur 2 ist ein Teil der Verdichterseite eines Abgasturboladers 10 im Schnitt entlang seiner Längsachse 51 gezeigt, bei dem die erfindungsgemässe Vorrichtung 40 in das Gehäuse 50 des Abgasturboladers 10 integriert ist. Als verdichtendes Element 52 im Verdichter 14 wirkt das Verdichterrad 53, das mit seiner Nabe 54 auf der Welle 16 angeordnet ist. An der Nabe 54 sind die Laufschaufeln 56 des Verdichterrades 53 befestigt. Über die Ansaugleitung 26, die mit der Umgebung 58 in Verbindung steht, wird Luft - gekennzeichnet als Hauptströmung A - angesaugt und über das Verdichterrad 53 und einen Diffusor 60 in ein Spiralgehäuse 62 des Verdichters 14 geführt, das Bestandteil der Verdichterleitung 28 ist. Dabei wird die Luft vom Umgebungsdruck p1 auf den Druck p2 verdichtet. Eine Verbindungsöffnung 64 im Spiralgehäuse 62 verbindet den spiralförmigen Strömungskanal im Spiralgehäuse 62 mit einem Hohlraum 66 im verdichterseitigen Teil des Gehäuses 50 des Abgasturboladers 10. Der Hohlraum 66 ist über eine Ventilöffnung 68 mit der Umgebung 58 verbunden, die mittels einer im Zusammenspiel mit der Ventilöffnung 64 als Rückschlagventil 48 ausgebildeten Klappe 70 verschlossen ist, solange der Umgebungsdruck p1 geringer ist als der Druck p2 im Spiralgehäuse 62. Herrscht aber gegenüber dem Umgebungsdruck p1 im Spiralgehäuse 62 ein Unterdruck p2, wie dies eben bei einer schnellen Lastaufnahme aus dem Leerlauf der Fall ist, so öffnet sich die Klappe 70 gegen die Kraft einer Feder 72, beispielsweise in die gestrichelt dargestellte Position 74, und Umgebungsluft strömt durch den Hohlraum 66 des Gehäuses 50 solange bis die Drücke p1 und p2 wieder gleich gross bzw. der Druck p2 wieder grösser als der Umgebungsdruck p1 ist. Der Hohlraum 66 im Gehäuse 50 dient also in diesem Fall als Bypassleitung 42 zur Umgehung desjenigen Elementes im Verdichter 14 über dem das angesaugte Gas Luft verdichtet wird. Der Hohlraum 66 dient also der Umgehung des Verdichterrades 52, von der stromauf gelegenen Seite mit Umgebungsdruck p1 zur stromab gelegenen Seite mit Druck p2.

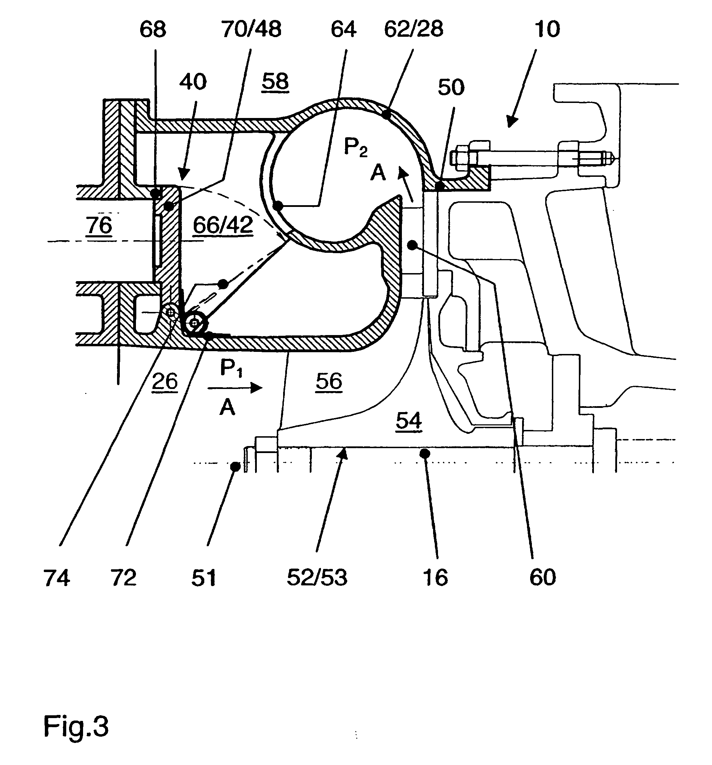

In Fig. 3 ist ein zweites Beispiel für eine solche im Gehäuse 50 des Abgasturboladers 10 integrierte Bypassleitung 42 gezeigt. Der Aufbau ist prinzipiell gleich wie in Fig. 2. Der als Bypassleitung 42 dienende Hohlrum 66 ist allerdings mittels des Rückschlagventils 48 statt direkt mit der Umgebung 58 mit einer Leitung 76 verbunden, welche ihrerseits mit der Umgebung 58, der Ansaugleitung 26 und/oder z.B. mit dem Brenngasbehälter 29a und/oder der Verbindungsleitung 27 strömungsverbunden sein kann (nicht dargestellt).

Ist die Bypassleitung 42 im Gehäuse 50 des Abgasturboladers 10 integriert, so können statt der einfachen Klappenvorrichtung 70 mit Feder 72 auch andere Rückschlagventile 48 oder andere Mechanismen mit gleicher Wirkung verwendet werden. Um die Strömungsverhältnisse im Spiralgehäuse 62 nicht negativ zu beeinflussen, kann auch die Verbindungsöffnung 64 im Spiralgehäuse 62 mit einem entsprechenden Ventil versehen sein. Der Hohlraum 66 kann auch als im Gehäuse eingearbeiteter strömungstechnisch optimierter Kanal ausgebildet sein und das oder die Rückschlagventile dann z.B. als Kugelventile ausgebildet sein. Wie in Fig. 1 beschrieben kann aber auch eine nicht in das Gehäuse integrierte Bypassleitung 42 verwendet werden, was sich insbesondere zum Nachrüsten bestehender Anlagen besonders eignet.

### Bezugszeichenliste

- 10: Abgasturbolader
- 12: Turbine
- 14: Verdichter
- 16: Welle
- 18: Strömungsmesser
- 20: Brennkraftmaschine
- 21: Brennkammer
- 22: Abgasleitung
- 24: Abgasableitung
- 26: Ansaugleitung
- 27: Verbindungsleitung
- 28: Verdichterleitung
- 29a, 29b, 29c, 29d: Brenngasbehälter
- 30: Flanschverbindung
- 32: Ansaugkanal
- 34: Strömungsleitung
- 36: Drosselklappe
- 38: Ladeluftkühler
- 40: Vorrichtung
- 42, 43: Bypassleitung
- 44: erste Seite
- 46: zweite Seite
- 48: Regelelement, Rückschlagventil
- 50: Turboladergehäuse
- 51: Längsachse des Abgasturboladers
- 52: verdichtendes Element
- 53: Verdichterrad
- 54: Nabe
- 56: Laufschaufel
- 58: Umgebung
- 60: Diffusor
- 62: Spiralgehäuse
- 64: Verbindungsöffnung
- 66: Hohlraum
- 68: Ventilöffnung
- 70: Klappe
- 72: Feder
- 74: Position "offen"
- 76: Leitung

## Patentansprüche

1. Verfahren zum Betreiben eines zur Aufladung einer Brennkraftmaschine dienenden Abgasturboladers, bei dem eine Hauptströmung eines Gases über eine Ansaugleitung einem Verdichter des Abgasturboladers zugeführt, im Verdichter mittels eines verdichtenden Elementes verdichtet und über eine Verdichterleitung in einen Ansaugkanal der Brennkraftmaschine geführt wird, wobei die via den Ansaugkanal an Brennkammern der Brennkraftmaschine weitergeleitete Gasmenge mittels einer zwischen dem Verdichter und den Brennkammern angeordneten Drosselklappe reguliert wird, **dadurch gekennzeichnet, dass** wenn im Bereich stromab des verdichtenden Elementes (52) zwischen dem verdichtenden Element (52) und der Drosselklappe (36) ein Unterdruck gegenüber dem Druck in der Ansaugleitung (26) stromauf des verdichtenden Elementes (52) entsteht, dieser Unterdruck dazu genutzt wird, eine Bypassleitung (B) zu Steuern, die stromauf des verdichtenden Elementes (52) aus der über das verdichtende Element (52) geführten Hauptströmung (A) abgezweigt wird, das verdichtende Element (52) von seiner stromaufwärts gelegenen Seite zu seiner stromabwärts gelegenen Seite umströmt und stromab des verdichtenden Elementes (52) stromauf der Drosselklappe (36) wieder in die Hauptströmung (A) zurückgeführt wird.

2. Verfahren nach Anspruch 1, **dadurch gekennzeichnet, dass,** die Bypassströmung (B) stromab eines Strömungsmessers (18) aus der Hauptströmung (A) in der Ansaugleitung (26) abgezweigt wird, und/oder im Bereich der Verdichterleitung (28) wieder in die Hauptströmung (A) zurückgeführt wird.

3. Verfahren nach Anspruch 1 oder 2, **dadurch gekennzeichnet, dass**, wenn die Druckverhältnisse umkehren und ein Überdruck im Bereich zwischen Drosselklappe (36) und verdichtendem Element (52) gegenüber dem Bereich stromauf des verdichtenden Elementes (52) in der Ansaugleitung (26) entsteht, ein Durchströmen der Bypassleitung (42, 43) von der stromabwärts gelegenen Seite zur stromaufwärts gelegenen Seite des verdichtenden Elementes (52) verhindert wird.

4. Verfahren nach Anspruch 3, **dadurch gekennzeichnet, dass** die Strömung durch die Bypassleitung (42, 43) von der stromabwärts gelegenen Seite zur stromaufwärts gelegenen Seite des verdichtenden Elementes (52) mittels mindestens eines Regelelements (48), welches eine Strömung nur von der stromaufwärts gelegenen Seite zur stromabwärts gelegenen Seite des Verdichters zulässt, verhindert wird.

5. Vorrichtung zum Betreiben eines Abgasturboladers, bei der ein Verdichter des Abgasturboladers stromauf mit einer Ansaugleitung und stromab mit einer Verdichterleitung strömungsverbunden ist, die Verdichterleitung mit einem Ansaugkanal einer Brennkraftmaschine zu einer Strömungsleitung verbindbar ist, wobei in der Strömungsleitung eine Drosselklappe vorgesehen ist, umfassend eine Bypassleitung die auf ihrer ersten Seite mit der Ansaugleitung stromauf eines verdichtenden Elementes des Verdichters und mit ihrer zweiten Seite mit der Strömungsleitung stromab des verdichtenden Elementes des Verdichters verbindbar ist, wobei die Bypassleitung (42, 43) im montierten Zustand stromab verdichtenden Elementes (52) des Verdichters (14) zwischen dem verdichtenden Element (52) und der Drosselklappe (36) mit der Strömungsleitung (34, 32, 28) verbunden ist **dadurch gekennzeichnet, dass** dass sie mindestens ein Regelelement (48) aufweist, welches derart ausgebildet ist, dass es nur eine Umströmung des verdichtenden Elementes (52) von seiner stromaufwärts gelegenen Seite zu seiner stromabwärts gelegenen Seite erlaubt und welches eine Strömung von der stromabwärts gelegenen Seite zur stromaufwärts gelegenen Seite des verdichtenden Elementes (52) verhindert, und dass das Regelement (48) druckgesteuert ist.

6. Vorrichtung nach Anspruch 5, **dadurch gekennzeichnet, dass** (48) zur Steuerung des Regelements nur der Druck in der Ansaugleitung (26) im Bereich stromauf des verdichtenden Elementes (52) und der Druck im Bereich zwischen dem verdichtenden Element (52) und der Drosselklappe (36) verwendet wird.

7. Vorrichtung nach einem der Ansprüche 5 oder 6, **dadurch gekennzeichnet, dass** die Bypassleitung (42,43) in ein Turboladergehäuse (50) integriert ist.

8. Abgasturbolader zum Aufladen einer Brennkraftmaschine dessen Verdichter stromauf mit einer Ansaugleitung und stromab mit einer Verdichterleitung strömungsverbunden ist, wobei die Verdichterleitung mit einem Ansaugkanal einer Brennkraftmaschine zu einer Strömungsleitung verbindbar ist, und in der Strömungsleitung eine Drosselklappe vorgesehen ist, umfassend eine Bypassleitung, die auf ihrer ersten Seite mit der Ansaugleitung stromauf des Verdichters verbunden ist und mit ihrer zweiten Seite mit der Strömungsleitung stromab des Verdichters verbunden ist, **dadurch gekennzeichnet, dass** die Bypassleitung (42, 43) zwischen einem verdichtenden Element (52) des Verdichters (14) und der Drosselklappe (36) mit der Verdichterleitung (28) verbunden ist und dass sie mindestens ein Regelelement (48) aufweist, welches derart ausgebildet ist, dass es nur eine Umströmung des verdichtenden Elementes (52) von seiner stromaufwärts gelegenen Seite zu seiner stromabwärts gelegenen Seite erlaubt und welches eine Strömung von der stromabwärts gelegenen Seite zur stromaufwärts gelegenen Seite des verdichtenden Elementes (52) verhindert, und dass mindestens eine Regelelement druckgesteuert ist.

9. Abgasturbolader nach Anspruch 8, **dadurch gekennzeichnet, dass** zur Steuerung des druckgesteuerten Regelelements nur die Drücke in der Ansaugleitung (26) im Bereich stromauf des verdichtenden Elementes (52) und im Bereich zwischen dem verdichtenden Element (52) und der Drosselklappe (36) genutzt werden.

10. Brennkraftmaschine mit einem Abgasturbolader, **dadurch gekennzeichnet, dass** der Abgasturbolader (10) gemäss einem der Ansprüche 8 oder 9 ausgestaltet ist.

## Claims

1. Method for operating an exhaust gas turbocharger serving for charging an internal combustion engine, in which a main flow of a gas is supplied to a compressor of the exhaust gas turbocharger via an intake line, is compressed in the compressor by means of a compressing element and is led via a compressor line into an intake duct of the internal combustion engine, the gas quantity transferred to combustion chambers of the internal combustion engine via the intake duct being regulated by means of a throttle valve arranged between the compressor and the combustion chambers, **characterized in that**, when a vacuum occurs in the region downstream of the compressing element (52) between the compressing element (52) and the throttle valve (36), as compared with the pressure in the intake line (26) upstream of the compressing element (52), this vacuum is utilized in order to control a bypass line (B) which is branched off upstream of the compressing element (52) from the main flow (A) led via the compressing element (52), flows around the compressing element (52) from its side located upstream to its side located downstream and is returned to the main flow (A) downstream of the compressing element (52) and upstream of the throttle valve (36).

2. Method according to Claim 1, **characterized in that** the bypass flow (B) is branched off from the main flow (A) in the intake line (26) downstream of a flowmeter (18) and/or is returned into the main flow (A) again in the region of the compressor line (28).

3. Method according to Claim 1 or 2, **characterized in that**, when the pressure conditions are reversed and excess pressure occurs in the intake line (26) in the region between the throttle valve (36) and the compressing element (52), as compared with the region upstream of the compressing element (52), a flow through the bypass line (42, 43) from the downstream side of the compressing element (52) to the upstream side of the latter is prevented.

4. Method according to Claim 3, **characterized in that** the flow through the bypass line (42, 43) from the downstream side of the compressing element (52) to the upstream side of the latter is prevented by means of at least one regulating element (48) that allows a flow only from the upstream side of the compressor to the downstream side of the latter.

5. Device for operating an exhaust gas turbocharger, in which a compressor of the exhaust gas turbocharger is flow-connected upstream to an intake line and downstream to a compressor line, and the compressor line can be connected to an intake duct of an internal combustion engine to form a flow line, a throttle valve being provided in the flow line, comprising a bypass line which can be connected on its first side to the intake line upstream of a compressing element of the compressor and with its second side to the flow line downstream of the compressing element of the compressor, wherein, in the assembled state of the downstream-compressing element (52) of the compressor (14), the bypass line (42, 43) is connected to the flow line (34, 32, 28) between the compressing element (52) and the throttle valve (36), **characterized in that** said bypass line has at least one regulating element (48) which is designed in such a way that it allows only a flow around the compressing element (52) from its side located upstream to its side located downstream and prevents a flow from the downstream side of the compressing element (52) to the upstream side of the latter, and **in that** the regulating element (48) is pressure-controlled.

6. Device according to Claim 5, **characterized in that** only the pressure in the intake line (26) in the region upstream of the compressing element (52) and the pressure in the region between the compressing element (52) and the throttle valve (36) are used for the control of the regulating element.

7. Device according to one of Claims 5 or 6, **characterized in that** the bypass line (42, 43) is integrated into a turbocharger casing (50).

8. Exhaust gas turbocharger for charging an internal combustion engine, the compressor of which is flow-connected upstream to an intake line and downstream to a compressor line, the compressor line being connectable to an intake duct of an internal combustion engine to form a flow line, and a throttle valve being provided in the flow line, comprising a bypass line which is connected on its first side to the intake line upstream of the compressor and is connected with its second side to the flow line downstream of the compressor, **characterized in that** the bypass line (42, 43) is connected to the compressor line (28) between a compressing element (52) of the compressor (14) and the throttle valve (36), and **in that** said bypass line has at least one regulating element (48) which is designed in such a way that it allows only a flow around the compressing element (52) from its side located upstream to its side located downstream and prevents a flow from the downstream side of the compressing element (52) to the upstream side of the latter, and **in that** at least one regulating element is pressure-controlled.

9. Exhaust gas turbocharger according to Claim 8, **characterized in that** only the pressures in the intake line (26) in the region upstream of the compressing element (52) and in the region between the compressing element (52) and the throttle valve (36) are used for the control of the pressure-controlled regulating element.

10. Internal combustion engine with an exhaust gas turbocharger, **characterized in that** the exhaust gas turbocharger (10) is designed according to one of Claims 8 or 9.

## Revendications

1. Procédé pour faire fonctionner un turbocompresseur à gaz d'échappement servant à la suralimentation d'un moteur à combustion interne, dans lequel un courant principal d'un gaz est acheminé par le biais d'une conduite d'admission à un compresseur du turbocompresseur à gaz d'échappement, est comprimé dans le compresseur au moyen d'un élément de compression et est conduit par le biais d'une conduite de compresseur dans un conduit d'admission du moteur à combustion interne, la quantité de gaz transportée par le conduit d'admission aux chambres de combustion du moteur à combustion interne étant régulée au moyen d'un papillon disposé entre le compresseur et les chambres de combustion, **caractérisé en ce que** lorsque dans la région en aval de l'élément de compression (52), il existe une dépression entre l'élément de compression (52) et le papillon (36) par rapport à la pression dans la conduite d'admission (26) en amont de l'élément de compression (52), cette dépression est utilisée pour commander une conduite de dérivation (B) qui part en amont de l'élément de compression (52) depuis l'écoulement principal (A) guidé par le biais de l'élément de compression (52), circule autour de l'élément de compression (52) depuis son côté amont vers son côté aval et, en aval de l'élément de compression (52), en amont du papillon (36), est à nouveau ramenée dans l'écoulement principal (A).

2. Procédé selon la revendication 1, **caractérisé en ce que** l'écoulement de dérivation (B) part en aval d'un débitmètre (18) de l'écoulement principal (A) dans la conduite d'admission (26), et/ou est ramené dans l'écoulement principal (A) dans la région de la conduite de compresseur (28).

3. Procédé selon la revendication 1 ou 2, **caractérisé en ce que**, lorsque les rapports de pression s'inversent et qu'une surpression existe dans la conduite d'admission (26) dans la région entre le papillon (36) et l'élément de compression (52) par rapport à la région en amont de l'élément de compression (52), une circulation de la conduite de dérivation (42, 43) du côté aval vers le côté amont de l'élément de compression (52) est empêchée.

4. Procédé selon la revendication 3, **caractérisé en ce que** l'écoulement à travers la conduite de dérivation (42, 43) du côté aval vers le côté amont de l'élément de compression (52) est empêché au moyen d'au moins un élément de régulation (48), qui autorise un écoulement uniquement du côté amont vers le côté aval du compresseur.

5. Dispositif pour faire fonctionner un turbocompresseur à gaz d'échappement, dans lequel un compresseur du turbocompresseur à gaz d'échappement est connecté fluidiquement en amont à une conduite d'admission et en aval à une conduite de compresseur, la conduite de compresseur peut être connectée à un conduit d'admission d'un moteur à combustion interne pour donner une conduite d'écoulement, un papillon étant prévu dans la conduite d'écoulement, comprenant une conduite de dérivation qui peut être connectée sur son premier côté à la conduite d'admission en amont d'un élément de compression du compresseur et sur son deuxième côté à la conduite d'écoulement en aval de l'élément de compression du compresseur, la conduite de dérivation (42, 43) étant connectée dans l'état monté, à la conduite d'écoulement (34, 32, 28) en aval de l'élément de compression (52) du compresseur (14) entre l'élément de compression (52) et le papillon (36), **caractérisé en ce qu'**il présente au moins un élément de régulation (48) qui est réalisé de telle sorte qu'il autorise uniquement une circulation autour de l'élément de compression (52) de son côté amont vers son côté aval et qui empêche un écoulement du côté aval vers le côté amont de l'élément de compression (52), et **en ce que** l'élément de régulation (48) est commandé par la pression.

6. Dispositif selon la revendication 5, **caractérisé en ce que** pour la commande de l'élément de régulation (48), on n'utilise que la pression dans la conduite d'admission (26) dans la région en amont de l'élément de compression (52) et la pression dans la région entre l'élément de compression (52) et le papillon (36).

7. Dispositif selon l'une quelconque des revendications 5 ou 6, **caractérisé en ce que** la conduite de dérivation (42, 43) est intégrée dans un carter de turbocompresseur (50).

8. Turbocompresseur à gaz d'échappement servant à la suralimentation d'un moteur à combustion interne, dont le compresseur est connecté fluidiquement en amont à une conduite d'admission et en aval à une conduite de compresseur, la conduite de compresseur pouvant être connectée à un conduit d'admission d'un moteur à combustion interne pour donner une conduite d'écoulement, et dans la conduite d'écoulement étant prévu un papillon, comprenant une conduite de dérivation, qui est connectée sur son premier côté à la conduite d'admission en amont du compresseur et qui est connectée à son deuxième côté à la conduite d'écoulement en aval du compresseur, **caractérisé en ce que** la conduite de dérivation (42, 43) est connectée à la conduite de compresseur (28) entre un élément de compression (52) du compresseur (14) et le papillon (36) et **en ce qu'**elle présente au moins un élément de régulation (48) qui est réalisé de telle sorte qu'il autorise uniquement une circulation autour de l'élément de compression (52) de son côté amont vers son côté aval et qui empêche un écoulement du côté aval vers le côté amont de l'élément de compression (52), et **en ce qu'**au moins un élément de régulation est commandé par la pression.

9. Turbocompresseur à gaz d'échappement selon la revendication 8, **caractérisé en ce que** pour la commande de l'élément de régulation commandé par la pression, on n'utilise que les pressions dans la conduite d'admission (26) dans la région en amont de l'élément de compression (52) et dans la région entre l'élément de compression (52) et le papillon (36).

10. Moteur à combustion interne comprenant un turbocompresseur à gaz d'échappement, **caractérisé en ce que** le turbocompresseur à gaz d'échappement (10) est configuré selon l'une quelconque des revendications 8 ou 9.
